# EUROPEAN PATENT SPECIFICATION

(11) **EP 1 183 569 B1**
(45) Date of publication and mention of the grant of the patent: **30.03.2005**
(21) Application number: 00927585.0
(22) Date of filing: 15.05.2000
(51) Int. Cl.: G03B 21/62, G02B 3/08

(54) **DISPLAY DEVICE**
ANZEIGEVORRICHTUNG
DISPOSITIF D'AFFICHAGE

(30) Priority: 14.05.1999 GB 9911306
(43) Date of publication of application: 06.03.2002
(73) Proprietor: Microsharp Corporaton Limited, Watchfield, Wiltshire SN6 8TY (GB)
(72) Inventor: FAIRHURST, Alison Mary, Thame, Oxfordshire OX9 3YE (GB); CLABBURN, Robin James Thomas, Sevenhampton, Wiltshire SN6 7QA (GB)
(74) Representative: Howden, Christopher Andrew
(86) International application number: PCT/GB2000/001858
(87) International publication number: WO 2000/070404

(56) References cited:
- EP-A- 0 573 905
- US-A- 5 442 482
- US-A- 5 751 387
- PATENT ABSTRACTS OF JAPAN vol. 006, no. 179 (P-142), 14 September 1982 (1982-09-14) & JP 57 094740 A (MATSUSHITA ELECTRIC IND CO LTD), 12 June 1982 (1982-06-12)

## Description

THIS INVENTION relates to a light diffusing sheet material having utility in various fields, including that of enhancing video displays, such as LCD displays.

In liquid crystal displays the bright image seen by the viewer is generated through the liquid cell either by light generated within the assembly by a back light or by the use of ambient light which is first transmitted through the cell and reflected at the rear of the cell, re-emerging through the cell to create a bright image. In this latter arrangement, due to the position of the viewer, the majority of light must be accepted off axis, preferably should not be further diffused on entering the display, and should preferably re-emerge on axis with some additional diffusion in order to provide an acceptable viewing cone. It is well known that Fresnel-like structures have the ability to re-direct light; as circular arrangements of facets to create lenses, or as linear arrangements of facets to create off axis effects. Structures of these types have been proposed incorporating materials with light diffusing characteristics, as described in US Patent No. 4911529, where the diffusive effect is provided by a so-called bulk diffuser comprising small particles of a material of a first refractive index dispersed in a matrix material of a second refractive index. Such materials are described in, for example US Patent No. 4983016, EP-A-0464499 or EP-A-0843203. An important characteristic of such bulk diffuser materials is that the amount of diffusion taking place within a given composition is dependant on the thickness of material through which the light travels. As a result, light entering an assembly containing such material off axis becomes more diffuse and reduced in intensity than light which enters on axis.

According to one aspect of the present invention there is provided an LCD display as defined by any of claims 1 and 2. This display can include an optical device comprising an element of light-transmitting material having a surface thereof configured to form a stepped, Fresnel-type light refracting element, such light transmitting material incorporating an array of integral graded refractive index structures adapted to impart light dispersing or diffusing characteristics to said light-transmitting sheet material or the element having a layer configured to form said stepped surface and an additional layer incorporating such an array of integral graded refractive index structures.

The applicants have found that, with a device of this character, light entering the device off-axis is diffused less and is less reduced in intensity than light entering on axis.

In certain instances, it may be desirable to render one surface of said element reflecting or partially reflecting by coating with a material with the necessary optical properties, such as a metal applied by deposition or sputtering.

The sheet material may comprise, for example, a photopolymer, in which the graded refractive index features are formed by exposure of a precursor of the material, (such as a monomer) to appropriate radiation in a predetermined pattern so as to produce localised variations of light intensity within the material and hence localised variations in degree of polymerisation and thus in refractive index. As another example, the material may be dichromated gelatine (DCG), in which the desired graded refractive index features are formed by exposure of the material itself to such a radiation pattern, to produce an equivalent effect. Such materials, correctly processed, possess the previously described desirable optical characteristics. The process techniques used may, for example include, those disclosed in EP-0294122 or EP-0801767 or US Patent No. 5695895 or GB-A-1499135. These types of diffusing materials may themselves have off axis or asymmetric characteristics, as described in EP 0768565, which can further enhance the off axis effects generated by the Fresnel structure. Methods of producing sheets of light diffusing material in which the light-diffusing characteristics are due to refractive index variations within the material are known and will not be discussed in greater detail here. These known methods, however, are directed to the production of either planar light-diffusing sheets or light-diffusing sheets having a surface configuration in the form of a plurality of convex domes, for example, adapted to enhance the diffusive characteristics of the material.

In a further aspect of the invention, the display is provided with an optical plate or sheet comprising a first body of light-transmitting material having an outer surface and an inner stepped or ramped surface carrying or conforming with and/or adhered to a second body of light-transmitting material, said second body of light-transmitting material having an outer surface remote from said coating and an inner surface conforming with and/or adhered to said stepped or ramped surface of said first body. Such a plate or sheet thus presents generally flat parallel surfaces on opposite sides thereof, which facilitates incorporation of the product into a stack with other flat sheets or plates, such as liquid crystal cells, polarising sheets, etc. in manufacture of products utilising such an optical sheet or plate.

Thus, according to one such further aspect, the display is provided with a light-transmitting plate or sheet comprising a first body of light-transmitting material having an outer surface and an inner stepped or ramped surface carrying or conforming with and/or adhered to a second body of light-transmitting material, said second body of light-transmitting material having an outer surface remote from said coating and an inner surface conforming with and/or adhered to said stepped or ramped surface of said first body, the refractive index of said second body of light-transmitting material being different from that of said first body of light-transmitting material, whereby light is refracted in passing from said first to said second body of light-transmitting material.

According to another such further aspect of the invention the display is provided with a partially light-reflecting, partially light-transmitting plate comprising a first body of light-transmitting material having an outer surface and an inner stepped or ramped surface carrying or conforming and/or adhered to with a semi-reflective coating and a second body of light-transmitting material, on the opposite side of said semi-reflective coating from said first body of material, said other side of said coating being correspondingly stepped or ramped, said second body of light-transmitting material having an outer surface remote from said coating and an inner surface conforming with and/or adhered to said opposite side of said semi-reflective coating, the refractive index of said second body of light-transmitting material being equal or close to that of said first body of light-transmitting material, whereby light suffers little or no refraction in passing from said first to said second body of light transmitting material.

Embodiments of the invention are described below with reference to the accompanying drawings, in which:-
FIGURE 1 is a view, in section perpendicular to the plane of major extension of the material, of a first example,
FIGURES 1a and 1b are corresponding views of variants each having a reflective coating,
FIGURE 2 is a view, partly in section and partly in perspective of another form of light-diffusing sheet,
FIGURES 2a and 3, 3a and 3b are sectional views similar to Figure 1, showing specific examples of materials,
FIGURE 4 is a graph showing diffusive characteristics for various materials,
FIGURE 5 is a view, similar to Figure 1, showing a further example of the invention,
FIGURE 6 is a schematic sectional view illustrating an effect which may arise in use of the embodiment of the invention, and
FIGURE 7 is a schematic sectional view of a further embodiment by which the effect illustrated in Figure 6 may be avoided.

In the embodiments of the present invention shown in the drawings, the device has the general form of a sheet 13 of light diffusing material, one surface of which is provided with a stepped or grooved configuration, after the fashion of a Fresnel lens or prism. As a result, the device, in addition to its diffusive characteristics, also has a directional characteristic in the sense that, if a parallel beam of light is directed on the sheet from one side thereof, the polar distribution of the diffused light emerging from the device has a peak along a direction which differs from the direction of the axis of the incident beam by an angle representative of the deviation imparted by the prismatic component due to the Fresnel prism surface configuration. The stepped surface of the device has, in cross-section, as shown in the Figures, a saw-tooth profile section, comprising major facets or ramps inclined typically at 10° to 20° to the general plane of the sheet, and minor facets extending generally perpendicular to said plane.

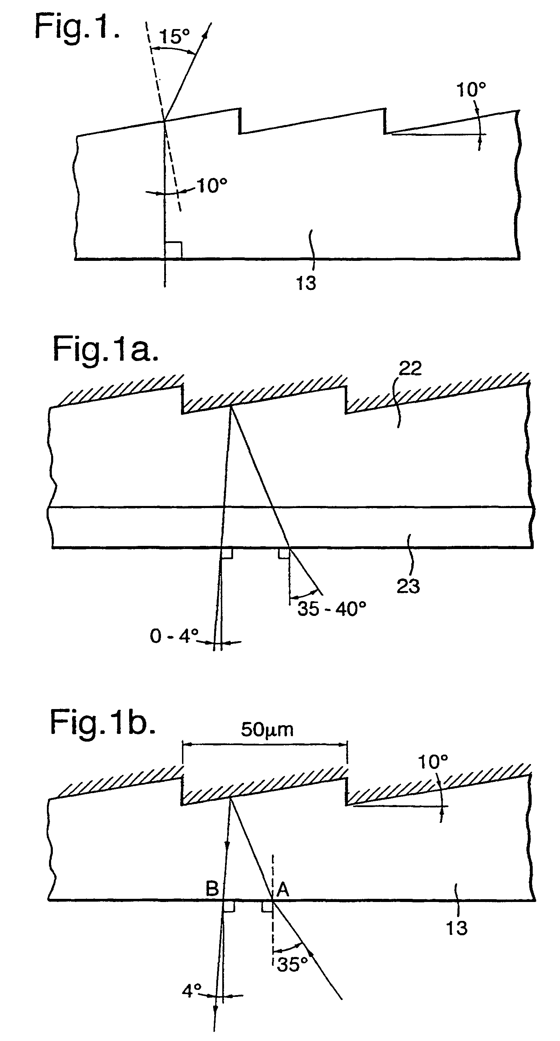

In the example shown in Figure 1, a light beam entering the material from below, normal to the (planar) lower surface is shown as passing through the material undeviated to pass through one of the facets of the Fresnel structure forming the upper surface, to be refracted through a 5° angle. In the example shown, the Fresnel structure comprises a series of major facets each inclined at 10° to the plane of the lower surface. It will, of course, be understood that these figures are merely exemplary. It will also be understood that the illustration of Figure 1 neglects the diffusive effect of the material. Taking this effect into account, it will be appreciated that the overall effect, for a parallel beam entering the material along the ray path indicated, is to produce, within the material, a spreading or scattering of light in a polar distribution with an intensity peak along the ray path shown.

Referring to Figure 1b, an arrangement is shown which is similar,to that of Figure 1 except that the stepped upper surface is rendered reflective, for example by metallisation e.g. applied by vapour deposition or by sputtering. The incorporation of a reflecting surface removed from the surface through which the light enters the assembly, causes the light, initially entering the material from below at a significant (35°-40°) angle to the normal, to be reflected at the reflective facets, passing through the material a second time to become more diffuse before emerging substantially on axis, that is to say emerging as a dispersing "bundle" of rays in a distribution having a maximum along the normal to the planar face.

Figure 1a shows an arrangement similar to that of Figure 1b, except that the light transmitting layer provided with the Fresnel-faceted surface (and which layer is indicated at 22 in Figure 1a) is of non-diffusive, transparent material and the desired diffusive effect is provided by an additional layer, referenced 23, of light-diffusing material. In the embodiments of Figures 1a and 1b described above, in which reflecting coating is used, that coating is applied to the corrugated or faceted surface of the material, arranged as the rear surface of the screen, in order to secure a more pronounced off-axis effect. However, the reflective coating may, of course, be applied to the flat surface of the device, again arranged as the rear surface.

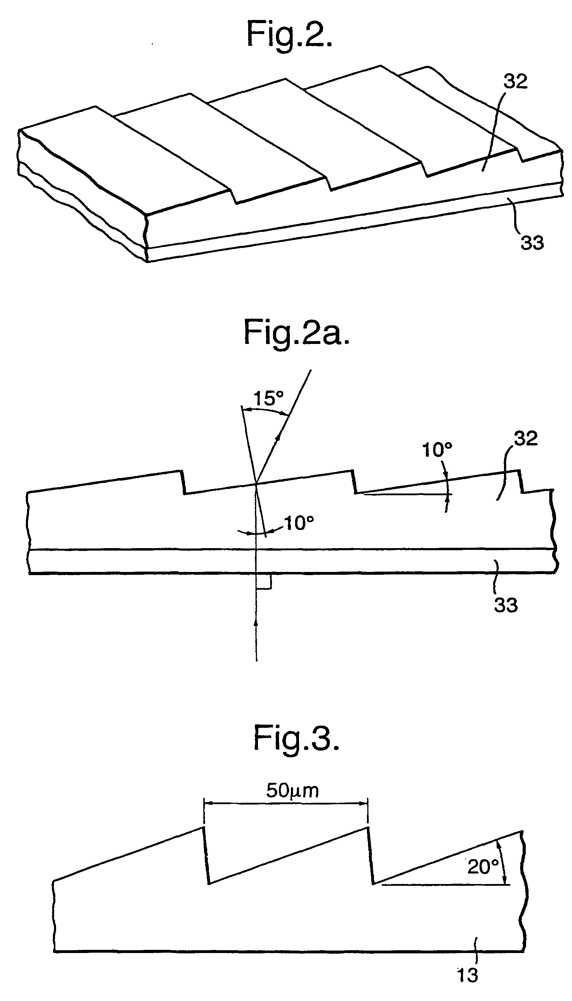

Figure 2 shows, partly in section and partly in perspective, a light-diffusing, light-transmissive sheet in accordance with the invention, comprising a layer 32 having a Fresnel stepped or faceted surface, and a flat substrate layer 33. The layer 32 may be of light-diffusing material and substrate 33 of transparent non-diffusive material, such as polyester or polycarbonate, or, similarly to the arrangement of Figure 1a, the layer 32 may be non-diffusive and the layer 33 diffusive.

Fig. 2a shows a specific example of an arrangement corresponding to that of Figure 2 wherein the Fresnel structure has a pitch of 50 µm and a facet angle of 10 degrees. Again, neglecting, initially, the diffusive characteristics of the material, a light beam entering on axis (i.e. normal to the "plane" of the material), exits at 5° to the normal.

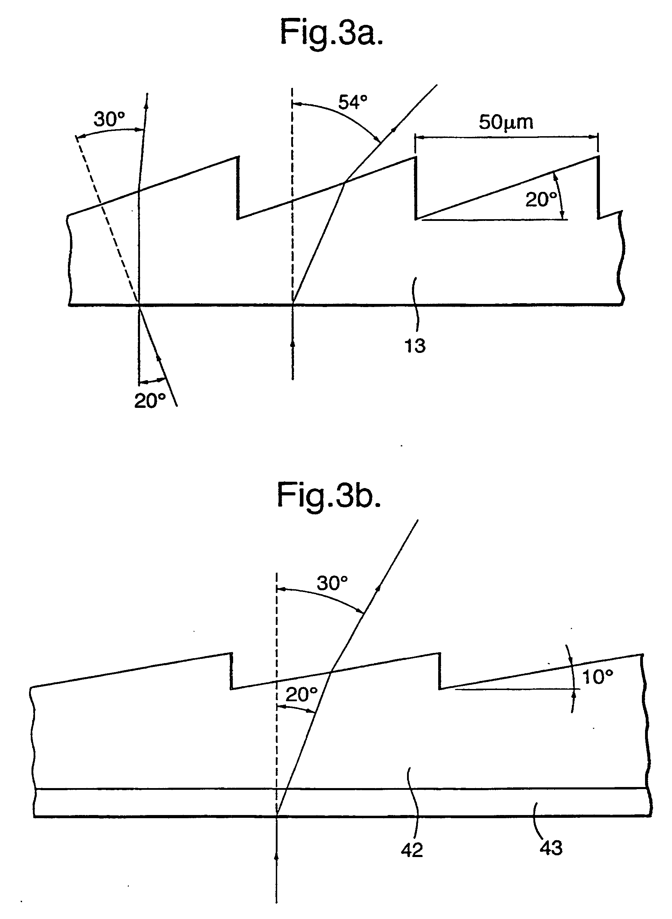

Fig. 3 shows an example similar to that of Figure 1 and having, by way of example, a Fresnel structure the pitch of which is 50 µm with a facet angle of 20 degrees. Fig. 3a shows a structure of the same pitch and facet angle, and shows additionally, for illustration, different ray paths through the light diffusing material 13. Figure 3b shows a structure similar to that of Figure 2a, but in which, however, the substrate layer, referenced 43, is a layer incorporating graded refractive index features arranged to impart a net deflective effect upon light passing therethrough as well as, typically, diffusing the light passing therethrough. Thus, in the example illustrated, light entering the layer 43 normal to its exposed lower (in the figure) surface, is subjected to a net, or average deflection of 20°. The Fresnel-faceted layer referenced 42, in this case may simply be transparent and non-diffusive or may itself be light-diffusing.

The ray diagrams in Figures 1 to 3b, as noted, neglect, for ease of illustration, the fact that the light-transmitting layers of the device are not simply transparent, but that one or each such layer has a light-diffusing character.

Thus, in place of the emerging ray illustrated, there will, in practice, be a dispersing "bundle" of rays in a distribution having a maximum along the emerging ray path illustrated.

The stepped surface in the above embodiments may define, in effect, a plurality of precisely parallel similar V-section grooves extending across the sheet material so that, neglecting the diffusive features, the material acts as a thin prism. Alternatively, however, the grooves and ridges defined by the stepped surface may extend in circles or arcs and be of a form corresponding to that of the stepped surface of a Fresnel lens, whereby the refraction or reflection at the stepped surface will tend to "focus" the diffusive light provided thereby. In addition, the presence of the diffusing material will mask the discontinuities in the Fresnel structure to the viewer.

In the examples discussed, the light diffusing character of the light diffusing layer arises as a result of incorporating an array of graded refractive index features, for example graded refractive index microlenses or other features. These graded refractive index microlenses preferably have each a transverse dimension, i.e. a dimension measured parallel with the major planes of the sheet, which is small in relation to the pitch of the corrugated surface, i.e. the spacing between, for example, peaks of adjacent ridges of the corrugated surface, the graded refractive index features being likewise closely spaced in relation to one another, so that, for example, the mean spacing between adjacent such features may be several orders of magnitude less than the pitch of the corrugations on the surface. In the examples discussed, the graded refractive index features typically have an average diameter of 5 microns spaced apart (centre to centre), by, for example, a distance of 8 microns. Preferably in each said graded refractive index feature, the refractive index may be substantially constant along any line perpendicular to the plane of the sheet but may vary with transverse position in the sheet material. Thus, in the case of a graded refractive index lens, the refractive index may vary with radial distance from the optical axis of the lens, as described in EP-A-0294122.

The refractive index gradations in the light-diffusing material may be produced by photographic means, for example, by contact printing through an appropriate mask as described in EP-A-0294122. However, whereas in EP-A-0294122, for example, the optical mask utilised is preferably plane, for the purposes of the present invention, the optical mask may comprise, for example, a glass plate having the desired stepped configuration on one surface and having that one surface coated with a thin layer of, for example, metallic chrome, so thin as not to alter the corrugated character of the glass surface, the chrome layer being provided with an array of transparent windows or apertures etched therein by photo-etching techniques so as to form an optical printing mask. The stepped, chromed surface of the plate may then be pressed against the exposed surface of, for example, a layer of photopolymerisable monomer (destined to form the layer 33 of Figure 2, for example) on a transparent substrate, so as to form the desired corrugations by what is effectively an embossing technique. Alternatively the photopolymerisable material may be cast on the stepped chromed surface. The layer of photopolymerisable monomer, still in contact with the glass plate or mask, may then be exposed to polymerising light through such mask. Thereafter, and after a subsequent blanket exposure to polymerising light, for example directed through the transparent substrate, the plate may be separated from the finished product. Alternatively, the diffuser/Fresnel lens or prism combination can be created a two step process; forming a planar diffuser as previously described then embossing the Fresnel structure into one surface using a combination of heat and some pressure. In this instance the embossing may be effected using a copper die, formed by machining the Fresnel structure into the surface of a copper plate using a diamond tool. Whilst the above description, and EP-A-0294122, make reference to the use of photopolymer as the material in which graded refractive index features are induced by exposure to appropriate light or other radiation, other materials in which refractive index variations can similarly be induced by such exposure, may be used utilising the same exposure techniques. Thus, for example, dichromated gelatine (DCG) may be used as the material in which graded refractive index lenses or other graded refractive index features are induced to impart light diffusing characteristics to the device.

It is preferable, particularly where the devices are to be used in conjunction with LCD displays, that the device in accordance with the invention or the several layers thereof, should be non-birefringent, i.e. should be polarisation-maintaining.

A particular use of the above materials is as an overlay for front-lit LCD displays in, for example, portable telephones, portable computers etc., to allow the user to view the display from the optimum angle without obstructing incident light and without being troubled by extraneous surface reflections. In such an application of course, no reflective coating is utilised and the or each layer of the diffusing screen should be light-transmitting. In an arrangement such as illustrated in Figure 2, the substrate may be constituted by the, for example glass, cover plate of the LCD display.

Of equal significance are devices in which, as in Figures 1a and 1b above, one surface, usually the surface in which the Fresnel structure is present, is coated with a reflecting or partially reflecting coating, typically a metal such as aluminium. Devices of this type may be incorporated behind the liquid crystal cell in a display illuminated using ambient lighting.

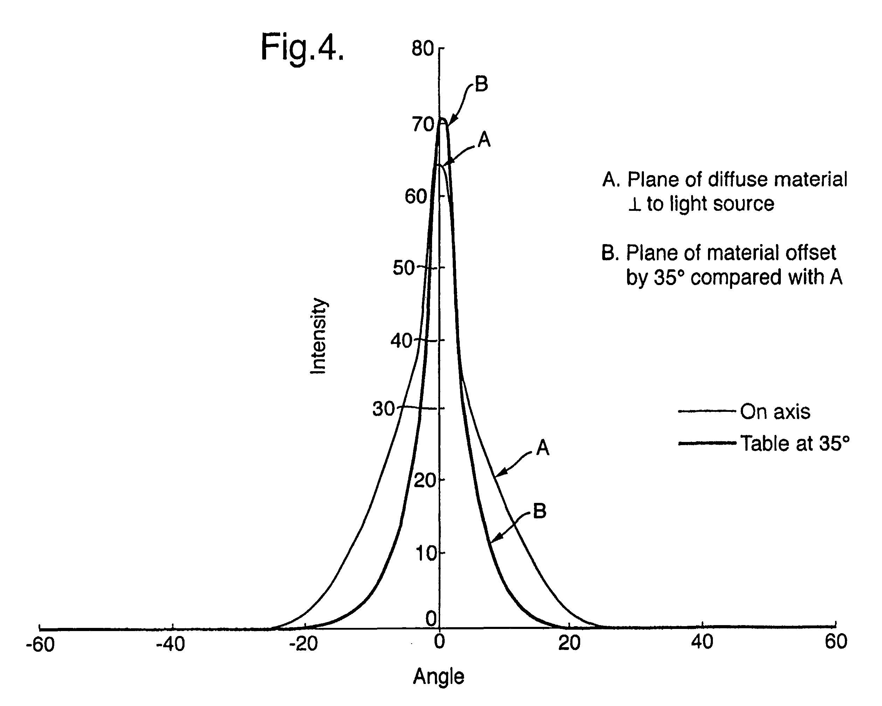

In the arrangements of Figures 1a and 1b, light is diffused to a minimum extent on arrival at 35 to 40 degrees to the normal to the lower surface (i.e. the normal to the general "plane" of the material) but is diffused more strongly after reflection at the reflective coating, during the return passage through the diffusing material. These differences in diffusion and intensity are clearly shown in Fig. 4 where intensity and angle or view resulting from different light entry angles are compared. Thus, Figure 4 shows the characteristics of a planar sheet of graded refractive index light diffusing material. Graph A was derived by directing a beam of light through such sheet of material, arranged perpendicular to the beam axis and measuring the intensity of light (plotted along the Y-axis) emerging from the sheet on the opposite side thereof, along directions at various angles (plotted along the X axis) from the beam axis. Graph B was produced in the same way but with the sheet of graded refractive index diffusing material arranged with the normal to its plane angled at 35° with respect to the beam axis.

In a few applications, it may actually be desirable to reverse the normal light paths obtaining in the sense that it may be desired to have light from the display concerned exit with a maximum intensity along an axis which is inclined significantly to the normal to the plane of the display (and hence to the plane of the overlay sheet) with the incident light entering the display normally or inclined oppositely to the axis along which the emerging light is most intense. Use of the display in this way is herein, for convenience, referred to as use "in the reverse mode".

Whilst, in some of the examples described above, the graded refractive index features responsible for the diffusion of light are formed integrally with the material affording the stepped or faceted surface, in other examples the device is formed as a plurality (e.g. two, three or more) of distinct, superimposed layers, with one such layer, preferably an outer layer, being of a transparent material of uniform refractive index but provided with the ramped or faceted refractive surface and another such layer, for example juxtaposed with the layer with the faceted surface, incorporating the graded refractive index features.

Indeed, in some embodiments where no, or minimal diffusion of light is required, a diffusing layer or surface may be omitted, the overlay or underlay in such a case comprising a simple Fresnel prism plate or reflector or semi-reflector, which may, for example, still be of utility in LCD displays, for example in some applications, in again allowing the user to view the display from the optimum angle without obstructing incident light. However, even where no significant optical diffusion is desired, it is preferred that the "flat" surface of such a plate or sheet, i.e. the surface opposite that provided with the stepped profile, should be sufficiently textured or irregular to minimise reflection of light thereby, (see below).

It has been found that in some applications, particularly in relation to LCD displays, surface reflection, for example from the planar surface generally presented towards the viewer, of a transparent or light-transmitting cover plate through which an image is intended to be viewed, can be troublesome. (This is particularly so for a display used in the reverse mode, as herein defined). The applicants have established that such troublesome reflections can be eliminated, or much reduced, without significantly impairing the functionality of such a cover plate, by a relatively minor texturing or surface relief patterning of the plate surface presented to the viewer, for example by forming such surface with a myriad of minute rounded bumps or hollows which may be, but need not be, in the form of low power lenslets or microlenses for example having diameters of the order of 5 to 10 µm and radii of surface curvature of < 20 µm. Preferably, in order to avoid diffraction effects, such microlenses are arranged substantially randomly on the surface of such cover plate. In the preferred embodiment, however, the minute bumps or hollows referred to are of substantially random shape or contour as viewed perpendicular to the relevant surface, although preferably without sharp edges or angles, but with a mean transverse dimension of the same order (e.g. 10µ). Such surface texturing may be produced, for example, by embossing with plates derived by photo-resist and etching techniques from optical masks bearing a speckle pattern and produced as described in WO94/29768.

It may, indeed, be advantageous to provide such small scale texturing or surface relief on any surfaces in a display assembly which might otherwise produce troublesome reflections.

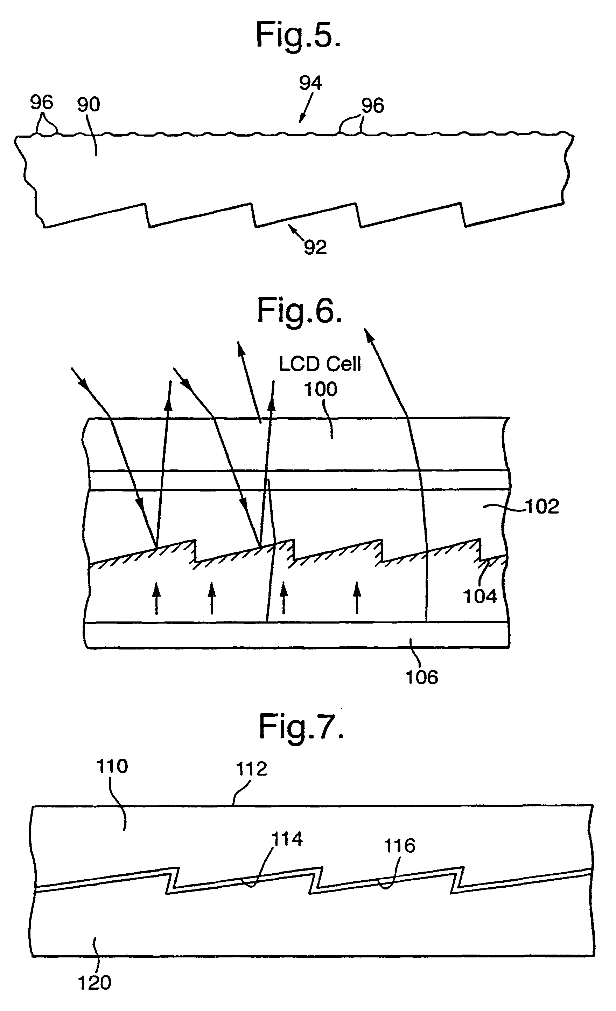

In an arrangement as illustrated in Figure 5, a light-transmitting plate 90 forming the top or outer plate of an LCD display stack (not shown) has a Fresnel stepped, faceted lower surface 97 and an upper surface 94 which is planar, from a macroscopic viewpoint, but which, on a microscopic scale is characterised by surface relief patterning or texturing taking the form of a plurality of shallow convex bumps 96 arranged at random on the surface. It will be understood that such a plate may also be used elsewhere in an LCD display, for example between the liquid crystal cell and a back-lighting arrangement, with the stepped or ramped surface 92 having a semi-reflective or transflective coating, as described in relation to Figures 1a and 1b for example. It will be understood that Figure 5, like the other figures, is, in effect a much magnified view of the material. It will also be understood that Figure 5 is not intended to represent accurately the relative scales of the bumps or domes 96 and the steps or ramps in the stepped surface 92. By way of example, the sheet 90 may be 50 µm or less in thickness and the pitch between corrugations of the Fresnel structure may be 50 µm to 25 µm. The major surfaces of the ramps or steps may be inclined at 10° to 30° to the overall plane of the sheet material. The sheet or plate 90 may be characterised by graded refractive index variations in the same way as described in relation to Figures 1 to 4, to provide the material with a bulk light-diffusing effect, or may be of uniform refractive index throughout, with only a very minor light-diffusing effect being imparted by the surface relief 96.

It is not essential that the facets of the ramped, Fresnel structure be optically smooth or perfectly flat. Indeed, in some instances some small-scale roughness or irregularity of the major surfaces of the ramps may be beneficial in contributing to desired diffusion and/or in minimising unwanted specular reflections (e.g. where the structure is principally required to have a refractive effect). Furthermore, a slight convex or concave curvature may be imparted to the ramp surfaces to produce particular desired optical effects.

The present invention allows the user to view the display from the optimum angle without obstructing incident light and at the same time to allow light from a back-lighting arrangement to more effectively reinforce reflected incident light.

Referring to the schematic diagram of Figure 6, this shows an LCD display having an LCD cell 100 superimposed upon a plate 102 of light-transmitting material having a planar upper face parallel with the upper and lower plates of the LCD cell and having a Fresnel-stepped or ramped lower surface which is provided with a semi-reflective or transflective coating, 104, the plate 102 being interposed between the LCD cell 100 and a back lighting assembly 106, arranged to direct light towards the cell perpendicularly to the faces of the latter. It will be observed, however, that the light from assembly 106 is refracted by the inclined steps or ramps in the lower surface of plate 102 so that the viewing angle at which the viewer receives light most brightly from the back-lighting arrangement is slightly displaced from the normal, (i.e. from the perpendicular to the display) at which the display is best viewed. Furthermore, given that the stepped semi-reflective surface is intended to reflect incident light so that it passes normally (i.e. perpendicularly) through the cell 100, one result is that where back-lighting by assembly 106 is being used to supplement reflected illumination the viewing angles for peak back-lighting brightness and for peak reflected ambient light brightness do not coincide so that the reinforcement of reflected light by back light is less than theoretically would be possible. In order to overcome this difficulty, the applicants propose an arrangement illustrated in Figure 7, in which a partially light-reflecting, partially light-transmitting plate comprises, in addition to a first body 110 of light-transmitting material having an upper, outer surface which is generally planar and an inner stepped or ramped surface 114 carrying or juxtaposed with a semi-reflective coating 116, a second body 120 of light-transmitting material is provided on the opposite side of said semi-reflective coating 116 from the first body 110 of material, the inner or upper surface of this body 120 of light-transmitting material conforming to (and, for example, being adhered to) the underside of the coating 116. As the coating 116 (which is naturally of negligible thickness) conforms closely to the ramped surface 114, the lower side of the coating 116 is similarly ramped, as is the upper surface or boundary of body 120 which conforms to its coating 116. The second body 120 of light-transmitting material has an outer, lower, surface remote from the coating 116 which is planar and parallel with surface 112. The refractive index of the second body 120 of light-transmitting material is equal or close to that of the first body 110 of light-transmitting material, in embodiments in which each body 110, 120 is of uniform refractive index throughout, whereby light suffers little or no refraction in passing from said first to said second body of light-transmitting material.

Where, as may be the case in some embodiments, one or other, (or both), of the bodies 110, 120, is characterised by small scale refractive index variations, imparting light-diffusing properties to the body, the mean refractive index of body 110 is preferably substantially equal to that of body 120.

With a "sandwich" structure of the kind described above with reference to Figure 7, any refractive deviation imparted to a light ray, passing through the structure, at the surface 114, will be reversed at the opposing surface of the layer 120 (infinitesimally close to, or coincident with surface 114) so that for practical purposes the ray will pass through the structure without net deviation. Accordingly when the structure of Figure 7 is used in an LCD display arrangement such as illustrated in Figure 6, in place of the plate 102 illustrated in Figure 6, the light from assembly 106 can pass perpendicularly through the structure and through the LCD cell. Since ambient light entering the structure from above can also be arranged to be reflected back, by the semi-reflective ramped coating 116 normal to the LCD cell, it can readily be arranged that the light from the back-lighting assembly 106 and that reflected at the ramped surface have peak intensities along the same axis relative to the display, and thus reinforce one another most efficiently.

The structure of Figure 7 may be produced in any of a number of ways. For example one of the light-transmitting bodies 110, 120 may be formed by applying a curable transparent liquid plastics resin or lacquer in a layer upon a stepped or ramped mould surface (which may, for example, itself be formed, e.g. by embossing, on a flexible plastics sheet incompatible with said lacquer), so that the surface of the lacquer layer remote from the stepped surface is planar, causing or allowing the lacquer to cure, stripping the cured lacquer, (having now the physical configuration of a plate with one planar and one stepped surface) from the mould surface, depositing a semi-reflective coating, (e.g. a thin, vapour-deposited aluminium coating), on the stepped lacquered surface, thereafter applying a second layer of the same liquid lacquer to the aluminised ramped surface so that the surface of the second layer remote from the ramped surface is planar and parallel to the planar surface of the first layer, and allowing or causing said second layer to cure.

The arrangement of Figure 7 has an additional advantage, namely that the resulting structure has two opposite parallel faces, which facilitates incorporation of the structure in a stack with other elements having opposite parallel faces, such as LCD cells, polarising sheets etc., and also makes handling of the material during manufacture of such products easier and less exacting.

Indeed, in view of the last-mentioned advantages, a similar arrangement may be adopted where the Fresnel structure is intended to have a refractive, rather than a reflective effect. Such an arrangement may, in effect, correspond with that of Figure 7 but with the omission of the semi-reflective coating 116 (so that the bodies 110 and 120 are directly juxtaposed) and with the refractive indices of the two bodies 110 and 120 being significantly different.

Whilst the arrangement described with reference to Figure 7 has the advantages that light transmitted through the plate is transmitted undeviated, in some applications it may be advantageous for transmitted light to be subject to a predetermined deviation as well as for reflected light to be deviated by reflection, and in such a case, accordingly, the two materials on either side of the semi-reflective coating may be of significantly different refractive indices.

Indeed, depending upon the angles of reflection, etc. involved, it may be useful, in some instances, to rely entirely upon refractive index difference between the two materials to produce a desired degree of partial reflection (or total reflection where the angle of incidence of the light concerned is great enough for total internal reflection at the stepped interface between the two materials of different refractive index).

In the present specification "comprises" means "includes or consists of" and "comprising" means "including or consisting of".

## Claims

1. An LCD display having an LCD cell (100) having upper and lower transparent plates superimposed upon a plate (102) of light-transmitting material having a planar upper face parallel with the upper and lower plates of the LCD cell and having a Fresnel-stepped or ramped lower surface which is provided with a semi-reflective or transflective coating (104), the plate (102) being interposed between the LCD cell (100) and a back lighting assembly (106), arranged to direct light towards the cell perpendicularly to the faces of the latter, whereby ambient light incident on the LCD cell at an angle to the perpendicular to said upper and lower plates and passing through the cell to said plate (102) to be reflected by said semi-reflective coating, can be reflected thereby to pass substantially perpendicularly through said cell.

2. An LCD display having an LCD cell (100) having upper and lower transparent plates superimposed upon a composite, partially light-reflecting, partially light-transmitting plate which comprises a first body (110) of light-transmitting material having an upper, outer surface which is generally planar and an inner Fresnel-stepped or ramped surface (114) carrying or juxtaposed with a semi-reflective coating (116), said composite, partially light-reflecting, partially light-transmitting plate further comprising a second body (120) of light-transmitting material provided on the opposite side of said semi-reflective coating (116) from the first body (110) of light transmitting material, the inner or upper surface of said second body (120) conforming to the underside of the coating 116, the upper surface of said first body (110) and the lower surface of said second body (120) being planar and parallel with one another, said composite plate (110,102) being interposed between the LCD cell (100) and a back lighting assembly (106), arranged to direct light towards the cell perpendicularly to the faces of the latter, whereby ambient light incident on the LCD cell at an angle to the perpendicular to said upper and lower plates and passing through the cell to said composite plate (110, 102) to be reflected by said semi-reflective coating, can be reflected thereby to pass substantially perpendicularly through said cell, whilst light from said back-lighting assembly can pass through said composite plate without being significantly deviated.

3. An LCD display according to claim 2, wherein said second body (120) of light-transmitting material is of the same refractive index as said first body.

## Patentansprüche

1. LCD-Anzeigevorrichtung mit einer LCD-Zelle (100), die obere und untere transparente Platten aufweist, die auf einer Platte (102) aus lichtdurchlässigem Material übereinander liegen, das eine ebene Oberseite parallel zu den oberen und unteren Platten der LCD-Zelle aufweist und eine Fresnel-gestufte oder rampenartige Unterseite aufweist, die mit einer halbdurchlässigen oder transflektiven Beschichtung (105) versehen ist, wobei die Platte (102) zwischen der LCD-Zelle (100) und einer Anordnung (106) für Beleuchtung von hinten angeordnet ist, die gestaltet ist, um Licht in Richtung auf die Zelle senkrecht zu den Seiten der letzteren zu lenken, wodurch Umgebungslicht, das auf die LCD-Zelle unter einem Winkel zur Senkrechten zu genannten oberen und unteren Platten einfällt und durch die Zelle zu genannter Platte (102) tritt, um von genannter halbdurchlässiger Beschichtung reflektiert zu werden, dadurch reflektiert werden kann, um im wesentlichen senkrecht durch genannte Zelle zu treten.

2. LCD-Anzeigevorrichtung mit einer LCD-Zelle (100), die obere und untere transparente Platten aufweist, die auf einer zusammengesetzten, teilweise lichtreflektierenden, teilweise lichtdurchlassenden Platte übereinander liegen, die einen ersten Körper (110) aus lichtdurchlässigem Material mit einer oberen, äußeren Fläche, die allgemein eben ist, und einer inneren Fresnel-gestuften oder rampenförmigen Fläche (114) aufweist, die eine halbdurchlässige Beschichtung (116) trägt oder daran angrenzt, wobei genannte zusammengesetzte, teilweise lichtreflektierende, teilweise lichtdurchlassende Platte ferner einen zweiten Körper (120) aus lichtdurchlässigem Material umfaßt, der auf der gegenüberliegenden Seite von genannter halbdurchlässiger Beschichtung (116) vom ersten Körper (110) aus lichtdurchlässigem Material vorgesehen ist, wobei die innere oder obere Fläche von genanntem zweiten Körper (120) mit der Unterseite der Beschichtung (116) übereinstimmt, wobei die obere Fläche von genanntem ersten Körper (110) und die untere Fläche von genanntem zweiten Körper (120) eben und parallel zueinander sind, wobei genannte zusammengesetzte Platte (110, 102) zwischen der LCD-Zelle (100) und einer Anordnung (106) für Belichtung von hinten angeordnet ist, die gestaltet ist, um Licht in Richtung die Zelle senkrecht zu den Seiten der letzteren zu lenken, wodurch Umgebungslicht, das auf die LCD-Zelle unter einem Winkel zur Senkrechten zu genannten oberen und unteren Platten eintrifft und durch die Zelle zur zusammengesetzten Platte (110, 102) tritt, um von genannter halbdurchlässiger Beschichtung reflektiert zu werden, dadurch reflektiert werden kann, um im wesentlichen senkrecht durch genannte Zelle zu treten, während Licht von genannter Anordnung für Beleuchtung von hinten durch genannte zusammengesetzte Platte treten kann, ohne wesentlich abgelenkt zu werden.

3. LCD-Anzeigevorrichtung nach Anspruch 2, **dadurch gekennzeichnet, daß** genannter zweiter Körper (120) aus lichtdurchlässigem Material denselben Brechungsindex wie genannter erster Körper aufweist.

## Revendications

1. Ecran à cristaux liquides (LCD) équipé d'une cellule à cristaux liquides (100) ayant des plaques supérieure et inférieure transparentes superposées à une plaque (102) de matière translucide ayant une face supérieure plane parallèle aux plaques supérieure et inférieure de la cellule à cristaux liquides et ayant une surface inférieure en échelon de Fresnel ou à rampe qui est équipée d'un revêtement semi-réfléchissant ou transflectif (104), la plaque (102) étant interposée entre la cellule à cristaux liquides (100) et un ensemble de rétro-éclairage (106), disposé pour diriger la lumière vers la cellule perpendiculairement aux faces de celle-ci, moyennant quoi la lumière ambiante incidente sur la cellule à cristaux liquides à un angle perpendiculaire auxdites plaques supérieure et inférieure et traversant la cellule jusqu'à ladite plaque (102) pour être réfléchie par ledit revêtement semi-réfléchissant, peut ainsi être réfléchie pour passer sensiblement perpendiculairement à travers ladite cellule.

2. Ecran à cristaux liquides équipé d'une cellule à cristaux liquides (100) ayant des plaques supérieure et inférieure transparentes superposées à une plaque composite, partiellement réfléchissante, partiellement translucide qui comprend un premier corps (110) de matière translucide ayant une surface supérieure, extérieure, qui est généralement plane, et une surface intérieure en échelon de Fresnel ou à rampe (114) portant ou juxtaposée à un revêtement semi-réfléchissant (116), ladite plaque composite, partiellement réfléchissante, partiellement translucide comprenant en outre un deuxième corps (120) de matière translucide équipé, sur le côté opposé, dudit revêtement semi-réfléchissant (116), par rapport au premier corps (110) de matière translucide, la surface intérieure ou supérieure dudit deuxième corps (120) se conformant à la face inférieure du revêtement (116), la surface supérieure dudit premier corps (110) et la surface inférieure dudit deuxième corps (120) étant planes et parallèles entre elles, ladite plaque composite (110, 102) étant interposée entre la cellule à cristaux liquides (100) et un ensemble de rétro-éclairage (106), disposés pour diriger la lumière vers la cellule perpendiculairement aux faces de celle-ci, moyennant quoi la lumière ambiante incidente sur la cellule à cristaux liquides à un angle perpendiculaire auxdites plaques supérieure et inférieure et passant à travers la cellule jusqu'à ladite plaque composite (110, 102) pour être réfléchie par ledit revêtement semi-réfléchissant, peut ainsi être réfléchie pour passer sensiblement perpendiculairement à travers ladite cellule, tandis que la lumière provenant dudit ensemble de rétro-éclairage peut passer à travers ladite plaque composite sans être significativement déviée.

3. Ecran à cristaux liquides selon la revendication 2, dans lequel ledit deuxième corps (120) de matière translucide a le même indice de réfraction que ledit premier corps.
